# EUROPÄISCHE PATENTSCHRIFT

(11) **EP 1 958 798 B1**
(45) Veröffentlichungstag und Bekanntmachung des Hinweises auf die Patenterteilung: **21.03.2012**
(21) Anmeldenummer: 08101382.3
(22) Anmeldetag: 07.02.2008
(51) Int. Cl.: B60G 3/08, B60G 21/05, A01B 73/00

(54) **Achsaufhängung einer Zweiradanordnung einer landwirtschaftlichen Maschine**
Axle suspension of a two wheel array of an agricultural machine
Suspension d'axe d'un agencement à deux roues d'une machine agricole

(30) Priorität: 14.02.2007 DE 102007007277
(43) Veröffentlichungstag der Anmeldung: 20.08.2008
(73) Patentinhaber: John Deere Brasil Ltda, 98920-010 Rio Grande do Sul (BR)
(72) Erfinder: Kroth, Rogerio, Horizontina RS (BR); Gelbhar, Ademar, Santa Rosa (BR)
(74) Vertreter: Löser, Iris

(56) Entgegenhaltungen:
- EP-A1- 1 325 822
- EP-A2- 1 179 289
- EP-A2- 1 767 393
- DE-T2- 69 818 354

## Beschreibung

Die Erfindung betrifft eine landwirtschaftliche Maschine mit einer Achsaufhängung einer Zweiradanordnung, wobei die Achsaufhängung ein Gehäuse umfasst, welches wenigstens zwei mit jeweils einer Radachse verbundene Achsträger aufnimmt, wobei die Achsträger als Schwenkkörper ausgebildet sind, welche einen mit der jeweiligen Radachse verbundenen ersten Schenkel und einen zweiten Schenkel aufweisen, wobei die ersten Schenkel der jeweiligen Schwenkkörper sich auf entgegen gesetzten Seiten des Gehäuses erstrecken, wobei der erste und zweite Schenkel des jeweiligen Schwenkkörpers starr zueinander angeordnet sind und wobei die Schwenkkörper um wenigstens eine im Gehäuse ortsfest gelagerte Schwenkachse aufgehängt sind, und dass Verbindungsmittel vorgesehen sind, welche die Schwenkkörper derart gelenkig miteinander verbinden, dass eine Schwenkbewegung des einen Schwenkkörpers um seine Schwenkachse eine gleichgerichtete Schwenkbewegung des anderen Schwenkkörpers um seine Schwenkachse auslöst.

Stetig wachsende Anforderungen an landwirtschaftliche Maschinen bzw. Geräte hinsichtlich Produktivität und Leistungsvermögen führen dazu, dass landwirtschaftliche Maschinen bzw. Geräte, insbesondere Bodenbearbeitungsgeräte oder Bestellkombinationen immer größer werdende geometrische Ausmaße annehmen. In diesem Zusammenhang seien insbesondere Bodenbearbeitungsgeräte wie Kultiviermaschinen, insbesondere Pflüge, Eggen, Grubber, Fräsen etc. und Pflanzmaschinen, Sämaschinen bzw. Drillmaschinen genannt oder Bestellkombinationen, die mehrere der genannten Geräte vereinen. Die zunehmenden geometrischen Ausmaße dieser Maschinen bzw. Geräte führen wiederum zu einer Zunahme des Gewichtes, wodurch der bei landwirtschaftlichen Arbeiten von den Rädern der Maschinen bzw. Geräte auf den Boden ausgeübte Druck ansteigt und partiell höhere Bodenkompressionen auftreten, die sich negativ auf die Kultivierung und Bearbeitung des Bodens auswirken können.

Eine Möglichkeit dem entgegenzuwirken besteht darin, das Gewicht der Maschine bzw. des Gerätes auf eine größere Bodenkontaktfläche zu verteilen, so dass die durch die Reifen der Maschinen bzw. Geräte verursachte Bodenkompression verringert wird. Dies wird oftmals durch Zweiradanordnungen erzielt, indem die Belastung eines Rades auf zwei Räder verteilt wird und damit eine größere Kontaktfläche geschaffen werden kann. Somit üben Maschinen bzw. Geräte, die mit Zweiradanordnungen bestückt sind, gegenüber gleichartigen Maschinen bzw. Geräten mit Einradanordnungen, in der Regel einen geringeren Bodendruck aus, was sich positiv auf die Kultivierung und Bearbeitung des Bodens auswirkt.

Demzufolge werden Zweiradanordnungen eingesetzt, die über eine entsprechende Achsaufhängung mit zwei Radachsen verfügen, wobei die Radachsen starr miteinander verbunden sind, so dass das Gewicht gleichermaßen auf beide Räder übertragen werden kann.

Derartige Zweiradanordnungen sind beispielsweise in der EP 1 179 289 A2 offenbart. Dort wird ein Anbaurahmen für Bodenbearbeitungsgeräte vorgestellt, der mit Zweiradanordnungen versehen ist. An jeder Radanordnung ist eine Achsaufhängung vorgesehen, an der sich beidseitig eines Gehäuses der Achsaufhängung eine mit einem Rad bestückte Radachse erstreckt, wobei die Radachsen zueinander starr angeordnet sind, so dass sich das Gewicht des Rahmens bzw. des Gerätes an der Radanordnung gleichermaßen auf beide Radachsen bzw. Räder verteilt. Nachteilig wirkt sich aus, dass die Radachsen starr miteinander verbunden sind, so dass sich die Räder nicht unabhängig voneinander in vertikaler Richtung bewegen können und das Gewicht in bestimmten Situationen nicht optimal verteilt werden kann. Sobald nur eines der Räder durch eine Bodenerhöhung angehoben wird, wird das zweite Rad mit angehoben und hängt in der Luft. Trifft nur eines der Räder auf eine Bodensenke, hält das zweite Rad dieses in der Luft. Ähnliche Effekte treten auf, wenn das Bodenbearbeitungsgerät an Hanglagen eingesetzt wird.

EP 1 767 393 A2 offenbart eine landwirtschaftliche Maschine in Form eines Traktors mit einer Hinterradfederungsanordnung welche in Verbindung zu einem Antriebsstrang und Differential steht. Die Anordnung umfasst zwei parallel angeordnete Federschwenkarme, die jeweils an einem Gehäuse gelagert sind und sich in Längsrichtung des Traktors erstrecken. Federschwenkarme weisen jeweils zwei zueinander starr angeordnete Schenkel auf. Die Federschwenkarme sind an einem ihrer Schenkel über Verbindungsmittel gelenkig miteinander verbunden, so dass eine Schwenkbewegung des einen Federschwenkarms um seine Schwenkachse eine gleichgerichtete Schwenkbewegung des anderen Federschwenkarms auslöst. Die Anordnung ist konstruktiv aufwändig gestaltet und insbesondere für Bodenbearbeitungsgeräte oder Bestellkombinationen ungeeignet.

Die der Erfindung zugrunde liegende Aufgabe wird darin gesehen, eine Achsaufhängung der eingangs genannten Art anzugeben durch welche die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine landwirtschaftlicher Maschine der eingangs genannten Art derart ausgebildet, dass die Verbindungsmittel eine Verbindungsstrebe und Verbindungsbolzen umfassen, wobei die Verbindungsstrebe über die Verbindungsbolzen schwenkbar mit den Schwenkkörpern verbunden ist. Es sei darauf hingewiesen, dass ein mit der Radachse verbundener Schenkel als ein Schenkel zu verstehen ist, der sowohl einteilig und unlösbar, beispielsweise als Guss-, Schmiede- oder Schweißteil, mit der Radachse verbunden ist, oder auch mehrteilig und lösbar, beispielsweise als zusammengefügte Steckverbindung, mit der Radachse verbunden ist. Die Terminologie "verbunden" soll hier derart ausgelegt werden, dass auch eine einteilige Verbindung gemeint sein kann, so dass Schenkel und Radachse ein einziges Bauteil darstellen können. Dadurch, dass die Achsträger als Schwenkkörper ausgebildet sind und die Radachsen beidseitig des Gehäuses mit dem Achsträger verbunden sind, lassen sich die Radachsen und damit auch an der Radachse montierte Räder verschwenken. Die Schwenkbewegungen der Schwenkkörper werden über die vorgesehenen Verbindungsmittel derart eingeschränkt bzw. gesteuert, dass wenn der eine Schwenkkörper in eine Drehrichtung verschwenkt wird, der andere Schwenkkörper gleichermaßen mit derselben Drehrichtung verschwenkt wird. Gleichzeitig wird gewährleistet, dass über die Verbindungsmittel auch die an dem jeweiligen Schwenkkörper angreifenden Hebelkräfte auf den entsprechend anderen Schwenkkörper übertragen werden, so dass eine gleichmäßige Kräfteverteilung auf beide Schwenkkörper erfolgt. Wird beispielsweise bei Überfahren einer Bodenunebenheit ein über die eine Radachse mit dem einen Schwenkkörper verbundenes Rad ausgelenkt, dann überträgt sich diese Auslenkung auf den entsprechenden anderen Schwenkkörper, der wiederum die andere Radachse und das damit verbundene Rad auslenkt, und zwar in eine gegenüber dem ersten Rad entgegen gesetzte Richtung. Wird also das auf der einen Seite der Achsaufhängung angeordnete Rad angehoben, dann wird das auf der anderen Seite angeordnete Rad entsprechend abgesenkt, und umgekehrt. Somit ist gewährleistet, dass beide Räder gleichermaßen Bodenkontakt behalten. Der Schwenkkörper an sich kann verschiedenste Geometrien annehmen und ist nicht auf ein Zwei-Schenkelgebilde begrenzt. Vielmehr sind hier als Schenkel die um die Schwenkachse wirkenden Momenthebel gemeint, mit denen bei einer Schwenkbewegung des Schwenkkörpers um die Schwenkachse bzw. durch Auslenkung des einen Schenkels bzw. Momenthebels eine kinematischen Hebelgesetzen unterliegende Auslenkung des anderen Schenkels bzw. Momenthebels hervorgerufen wird. Die Verbindungsmittel umfassen eine Verbindungsstrebe und Verbindungsbolzen, wobei die Verbindungsstrebe über die Verbindungsbolzen schwenkbar mit den Schwenkkörpern verbunden ist. Die Verbindungsstrebe wird über die Verbindungsbolzen fest, jedoch verdrehbar bzw. schwenkbar, also gelenkig, mit dem Schwenkkörper verbunden. Die Verbindungsstrebe stellt ein starres Verbindungselement dar, welches Kräfte in wenigstens zwei Richtungen übertragen kann. Durch die Verbindungsstrebe werden die Schwenkkörper miteinander gekoppelt und es wird gewährleistet, dass der Abstand zwischen den Verbindungspunkten, an denen die Verbindungsstrebe mit den Verbindungsbolzen am Schwenkkörper gelenkig befestigt ist, stets gleich bleibt, so dass beim Verschwenken der Schwenkkörper der Drehwinkel des einen Schwenkkörpers gleich dem Drehwinkel des anderen Schwenkkörpers ist.

Vorzugsweise ist für jeden Schwenkkörper jeweils eine ortsfest gelagerte Schwenkachse vorgesehen. Dadurch können sich konstruktive Vorteile ergeben, insbesondere hinsichtlich einer kompakten Bauweise. Die Funktionalität der Achsaufhängung ist jedoch sowohl mit einer gemeinsamen Schwenkachse als auch mit zwei separaten Schwenkachsen gegeben, solange gewährleistet ist, dass die durch die Verbindungsmittel hergestellte Verbindung die Schwenkkörper beim Verschwenken in die gleiche Drehrichtung zwingt. Durch eine entsprechende Ausgestaltung der Schenkel der Schwenkanordnung kann dieses sowohl für eine gemeinsame als auch für zwei separate Schwenkachsen gewährleistet werden. Die entsprechende konstruktive Ausgestaltung, sowie die geometrischen Abmessungen der Verbindungsmittel und der Schwenkkörper sind im Einzelfall von einem Fachmann unter Zugrundelegung seines Fachwissens ohne Schwierigkeit realisierbar, so dass hier nicht näher darauf eingegangen werden soll.

Die Verbindungsmittel sind vorzugsweise in einem Abstand zu der Schwenkachse eines jeden Schwenkkörpers angeordnet, so dass mit dem zweiten Schenkel eine Hebelwirkung um die Schwenkachse auf den ersten Schenkel ausübbar ist. Je größer der Abstand ist, umso höher ist die Hebelwirkung auf den ersten Schenkel. Dabei ist der Abstand jedoch nicht zu groß zu wählen, so dass die Ausschläge der zweiten Schenkel bzw. die Verschwenkwege am Ende der Schenkel im Rahmen der konstruktiven Grenzen für das Gehäuse der Achsaufhängung bleiben. Hier ist ein konstruktiver Kompromiss zwischen Materialbeschaffenheit, hinsichtlich Festigkeit und erforderlicher Kraftübertragung, und geometrischer Ausmaße bzw. Kompaktheit zu beachten.

Die Verbindungsmittel sind vorzugsweise am zweiten Schenkel angeordnet, so dass die Länge des zweiten Schenkels als Hebel um die Schwenkachse auf den ersten Schenkel wirkt. Die Verbindungsmittel sind dabei vorzugsweise an den Enden des zweiten Schenkels angeordnet, damit eine kompakte Bauweise erzielbar ist. Denkbar ist es jedoch auch, die Verbindungsmittel an einer anderen Stelle anzuordnen.

Die Schwenkachse eines jeden Schwenkkörpers ist vorzugsweise zwischen dem ersten und dem zweiten Schenkel angeordnet. Sie kann jedoch auch an jeder anderen Stelle des Schwenkkörpers angeordnet sein, solange ein Hebel zu den Verbindungsmitteln hergestellt ist, so dass eine Schwenkbewegung des Schwenkkörpers um die Schwenkachse einen Verschwenkweg an den Verbindungsstellen der Verbindungsmittel hervorruft.

Die Schenkel eines jeden Schwenkkörpers sind starr in einem Winkel, vorzugsweise von 90°, zueinander angeordnet. Dabei können jedoch auch beliebig andere von 0° und 180° verschiedene Winkelanordnungen gewählt werden.

Als Schwenkachse bzw. Schwenkachsen sind vorzugsweise Lagerbolzen vorgesehen, die an ihren Enden in Lageröffnungen gelagert sind. Die Lageröffnungen sind dabei vorzugsweise an einer Gehäusewand des Gehäuses ausgebildet. Dies kann in Form von Aussparungen an der Gehäusewand oder auch durch an dem Gehäuse befestigte Buchsen realisiert sein.

An den Schwenkkörpern ist zwischen dem ersten und dem zweiten Schenkel eine Führungsöffnung ausgebildet, welche jeweils zwischen den Lageröffnungen auf den Lagerbolzen geführt ist. Selbstverständlich ist die gewählte Anordnung auch in umgekehrter Weise möglich, so dass beispielsweise die Schwenkachse bzw. die Lageröffnungen der Lagerbolzen am Schwenkkörper und Führungsöffnungen am Gehäuse ausgebildet sind. Die Führungsöffnung und/oder die Lageröffnungen können mit einer Lagerbuchse versehen sein, um die Lagereigenschaften bzw. die Gleiteigenschaften in den Öffnungen zu verbessern.

Vorzugsweise weisen die zweiten Schenkel bzw. ein Bereich der zweiten Schenkel schäkelförmig ausgebildete Endbereiche auf, in denen Lageröffnungen ausgebildet sind, in denen die Verbindungsbolzen gelagert sind.

Daran angepasst weist die Verbindungsstrebe vorzugsweise zwei Enden auf, an denen eine Führungsöffnung ausgebildet ist, welche auf dem jeweiligen Verbindungsbolzen geführt ist und die zweiten Schenkel der Schwenkkörper bzw. den als Momenthebel wirkenden Bereich der Schwenkkörper schwenkbar verbindet. Selbstverständlich kann auch hier die Anordnung auf umgekehrte Weise gewählt werden, so dass alternativ die Lageröffnungen auch an der Verbindungsstrebe und entsprechend die Führungsöffnungen am Schwenkkörper ausgebildet sein können. In diesem Falle wäre die Verbindungsstrebe an ihren Enden schäkelförmig ausgebildet und die zweiten Schenkel an ihrem Ende mit einer Führungsöffnung versehen. Die Führungsöffnung und/oder die Lageröffnungen können mit einer Lagerbuchse versehen sein, um die Lagereigenschaften bzw. die Gleiteigenschaften in den Öffnungen zu verbessern. Es sind auch andere als die oben beschriebenen Gelenk- und/oder Schwenkverbindungen bezüglich Schwenkkörper und Verbindungsmittel und/oder Schwenkkörper und Schwenkachse denkbar, solange eine schwenkbare Verbindung zwischen Schwenkkörper und Verbindungsmittel bzw. zwischen Schwenkkörper und Schwenkachse geschaffen wird.

Vorzugsweise erstrecken sich die Lagerbolzen und die Verbindungsbolzen horizontal zum Boden und quer zur Erstreckungsrichtung der ersten Schenkel, so dass vertikale Auf-/Abbewegungen der Räder möglich sind. Dabei sind durch entsprechend angepasste Geometrien der Schwenkkörper bzw. Schenkel sicherlich auch andere Ausrichtungen und Schwenkrichtungen denkbar, die vertikale Bewegungen der Räder zulassen.

Vorzugsweise weist der erste Schenkel der Schwenkkörper einen als Rohr ausgebildeten Aufnahmebereich auf, in dem eine Radachse aufnehmbar ist. Es können auch andere Ausbildungen gewählt werden, die es erlauben den Schwenkkörper mit der Radachse zu verbinden. So könnte die Radachse beispielsweise an den Schwenkkörper angeflanscht oder mittels Schweißverbindung direkt an den Schwenkkörper angeschweißt werden.

In einem bevorzugten Ausführungsbeispiel ist eine landwirtschaftliche Maschine vorgesehen, insbesondere ein Bodenbearbeitungsgerät oder eine Bestellkombination, welche mit wenigstens einer Achsaufhängung gemäß der oben beschriebenen Ausführungsform versehen ist. Hierbei wird die Achsaufhängung mit einem Geräterahmen der Maschine verbunden und stützt diesen gegenüber den Boden ab. Mehrere mit dem Geräterahmen verbundene Achsaufhängungen sorgen für eine Verteilung des Gewichtes der Maschine über die gesamte Konstruktion. Durch die schwenkbare Anhängung der Radachsen ist eine verbesserte Bodenhaftung der Räder gegenüber herkömmlichen starren Systemen gegeben, so dass ein Abheben einzelner Räder aufgrund von Bodenunebenheiten weitestgehend vermieden werden kann.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Explosionsansicht einer erfindungsgemäßen Achsaufhängung,
- Fig. 2: eine Querschnittsansicht der Achsaufhängung aus Fig. 1 und
- Fig. 3: ein von einem Schlepper gezogenes Bodenbearbeitungsgerät mit einer erfindungsgemäßen Achsaufhängung.

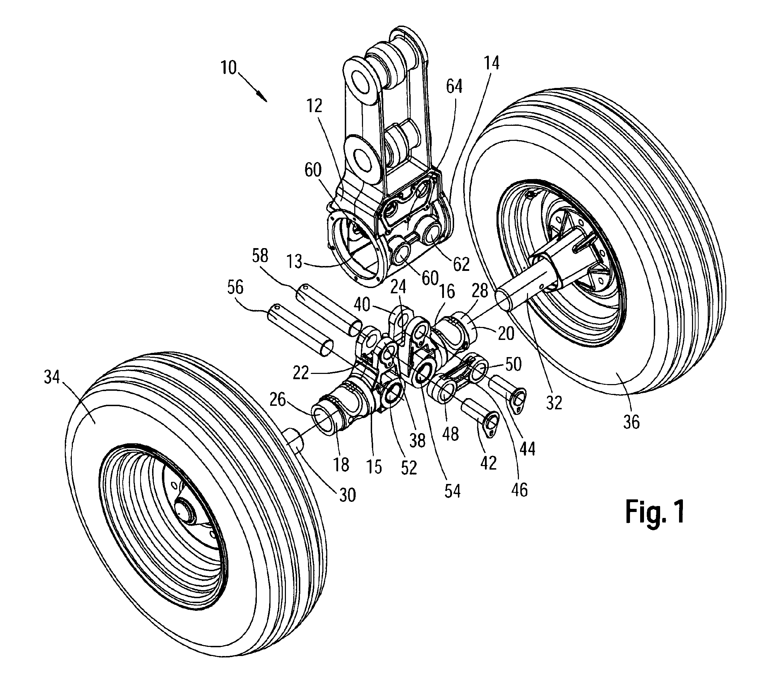

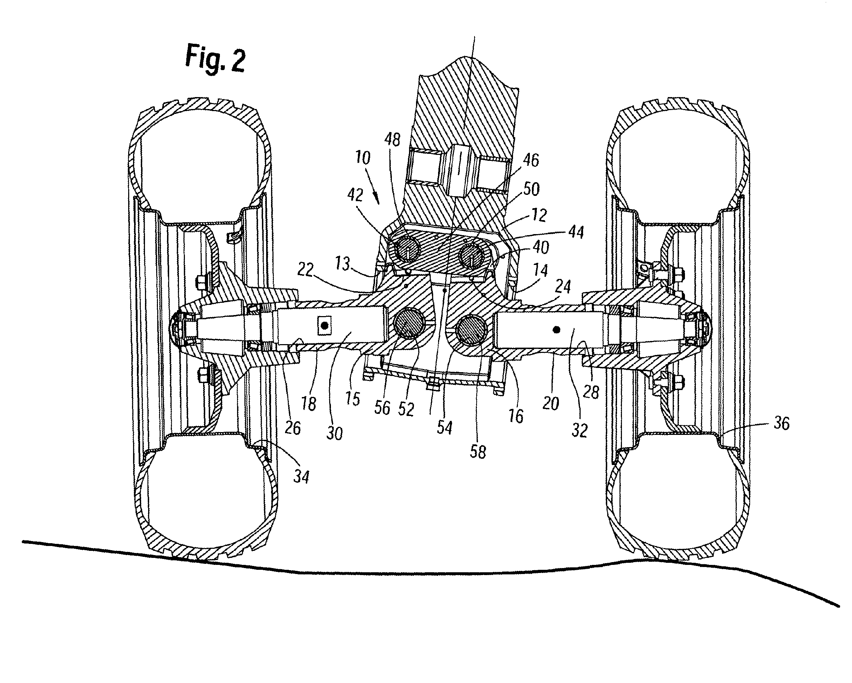

In den Figuren 1 und 2 ist eine erfindungsgemäße Achsaufhängung 10 für eine Zweiradanordnung dargestellt. Die Achsaufhängung 10 umfasst ein Gehäuse 12, in dem sich beidseitig aus dem Gehäuse 12 durch Öffnungen 13, 14 erstreckende Achsträger 15, 16 angeordnet sind. Die Achsträger 15, 16 sind knieförmig ausgebildet und weisen einen ersten Schenkel 18, 20 und einen zweiten Schenkel 22, 24 auf, die in einem rechten Winkel zueinander angeordnet sind.

Die ersten Schenkel 18, 20 weisen an ihren Enden einen Aufnahmebereich 26, 28 auf, der rohrförmig ausgebildet ist und zur Aufnahme einer Radachse 30, 32 dient. An den Radachsen 30, 32 sind in an sich bekannter Weise Räder 34, 36 aufgehängt, die die Achsaufhängung 10 gegenüber dem Boden abstützen. Die ersten Schenkel 18, 20 erstrecken sich quer zur Rollrichtung der Räder 34, 36.

Die zweiten Schenkel 22, 24 erstrecken sich in zum Boden vertikaler Richtung und sind starr mit den ersten Schenkel 18, 20 verbunden. Die Endbereiche der zweiten Schenkel 22, 24 sind schäkelförmig ausgebildet und weisen als Lageröffnungen 38, 40 ausgebildete Lagerstellen auf, in denen Verbindungsbolzen 42, 44 aufgenommen sind.

Die Achsaufhängung 10 umfasst ferner eine starre Verbindungsstrebe 46 an dessen Enden Führungsöffnungen 48, 50 ausgebildet sind.

Zwischen den ersten und den zweiten Schenkeln 18, 20, 22, 24 ist jeweils eine Führungsöffnung 52, 54 ausgebildet, in der jeweils ein Lagerbolzen 56, 58 aufgenommen ist. Die Lagerbolzen 56, 58 werden an ihren Enden in Lageröffnungen 60, 62 geführt, die an einer Gehäusewand 64 des Gehäuses 12 ausgebildet sind.

Das Zusammenwirken der in Figur 1 dargestellten Komponenten ist in Figur 2 verdeutlicht. Die Achsträger 15, 16 werden mit ihren Führungsöffnungen 52, 54 auf den am Gehäuse 12 in den Lageröffnungen 60, 62 gelagerten Lagerbolzen 56, 58 schwenkbar gelagert, wobei gegenüber dem Gehäuse 12 eine Schwenkbewegung der Achsträger 15, 16 um die die Schwenkachse bildende Längsachse der Lagerbolzen 56, 58 ermöglicht wird. Die Achsträger 15, 16 stellen somit Schwenkkörper dar, die eine Auf- und Abbewegung der ersten Schenkel 18, 20 bzw. der Radachsen 30, 32 und damit der Räder 34, 36 in vertikaler Richtung zum Boden erlauben.

Die in einem rechten Winkel starr zu den ersten Schenkeln 18, 20 angeordneten zweiten Schenkel 22, 24 führen somit ebenfalls eine Schwenkbewegung aus, falls der jeweilige erste Schenkel 18, 20 ausgelenkt wird, beispielsweise durch eine von den Rädern 34, 36 überrollte Bodenwelle. Die beiden sich in vertikaler Richtung erstreckenden zweiten Schenkel 22, 24 werden über die Verbindungsstrebe 46 und die in den Lageröffnungen 38, 40 geführten Verbindungsbolzen 42, 44 miteinander gelenkig verbunden. Die Verbindungsstrebe 46 überträgt dabei eine hervorgerufene Schwenkbewegung des einen Achsträgers 15, 16 auf den anderen Achsträger 15, 16, so dass eine Schwenkbewegung des einen Achsträgers 15, 16 eine gleichgerichtete Schwenkbewegung des anderen Achsträgers 15, 16 auslöst. Die Verbindungsstrebe 46 und die Verbindungsbolzen 42, 44 (zusammen mit den Lageröffnungen 38, 40) stellen somit Verbindungsmittel dar, die die zweiten Schenkel 22, 24 miteinander verbinden. Wird beispielsweise auf der in Figur 2 dargestellten rechten Seite der Achsaufhängung 10 von dem rechten Rad 36 eine Bodenerhebung überrollt, so bewegt sich der erste rechte Schenkel 20 vertikal nach oben, so dass der rechte Achsträger 16 eine Schwenkbewegung entgegen dem Uhrzeigersinn ausübt. Der rechte zweite Schenkel 24 wird automatisch nach links verschwenkt. Gleichzeitig zwingen die Verbindungsmittel (Verbindungsstrebe 46 mit Verbindungsbolzen 42, 44) den linken zweiten Schenkel 22 in eine nach links gerichtete Schwenkbewegung, so dass auch der linke Achsträger 15 eine Schwenkbewegung entgegen dem Uhrzeigersinn ausübt, was wiederum den linken ersten Schenkel 18 vertikal nach unten bewegt. Die beiden Achsträger 15, 16 führen somit eine gleichgerichtete Schwenkbewegung entgegen den Uhrzeigersinn aus. Als Folge dessen bewegt sich das linke Rad 34 nach unten, wodurch eine Höhendifferenz zwischen den Rädern 34, 36 ausgeglichen wird und beide Räder 34, 36 gleichbleibenden Kontakt zum Boden behalten. Für den umgekehrten Fall (Schwenkbewegung der Achsträger 15, 16 im Uhrzeigersinn) wird die nach links gerichtete Schwenkbewegung des linken ersten Schenkels 22 auf den rechten ersten Schenkel 24 übertragen, so das sich das linke Rad 34 vertikal nach oben und das rechte Rad 36 vertikal nach unten bewegt.

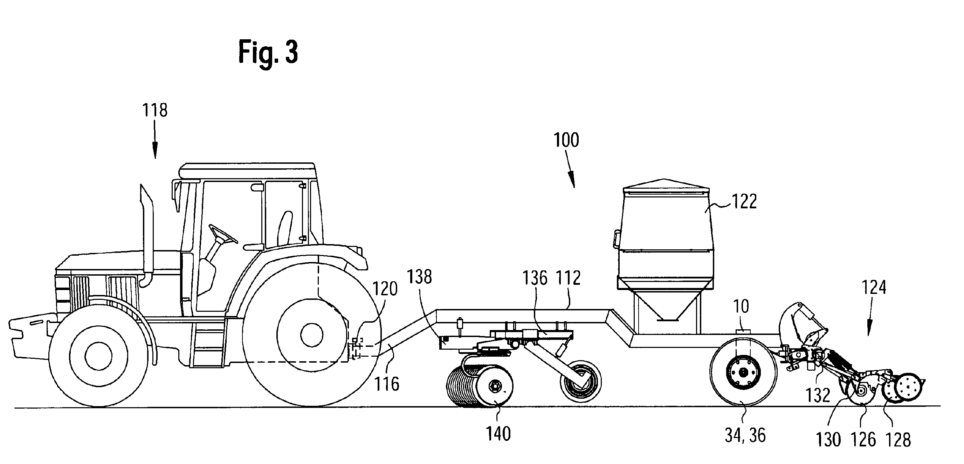

Figur 3 zeigt ein Anwendungsbeispiel einer erfindungsgemäßen Achsaufhängung 10 an einer landwirtschaftlichen Bestellkombination 100. Die Bestellkombination 100 weist einen sich in der Vorwärtsrichtung (in der Zeichnung von links nach rechts) erstreckenden Rahmen 112 auf, der sich über die mit der Achsaufhängung 10 verbundenen Räder 34, 36 auf dem Erdboden abstützt. An seinem vorderen Ende ist der Rahmen 112 über eine Deichsel 116 über eine lösbare Kupplung 120 mit einem Zugfahrzeug 118 in Form eines Ackerschleppers verbunden.

Der Rahmen 112 trägt vor den Rädern 34, 36 einen Saatgutbehälter 122 zur Aufnahme von Saatgut. Durch, in der Zeichnung nicht dargestellte, Messsysteme wird das Saatgut aus dem Saatgutbehälter 122 abgemessen und über Saatgutleitungen an der Rückseite des Rahmens 112 angeordneten Säeinrichtungen 124 zugeführt, die einen Furchenöffner 126 in Form einer Scheibe, Säschare 130, die das Saatgut in die durch den Furchenöffner 126 erzeugte Furche abgeben und Schließräder 128 zum anschließenden Schließen der Furche umfassen.

Es sind mehrere Säeinrichtungen 124 seitlich nebeneinander an einem sich am Rahmen 112 abstützenden, sich quer zur Vorwärtsrichtung erstreckenden Werkzeugträger 132 abgestützt. Vor dem Saatgutbehälter 122 ist unterhalb des Rahmens 112 ein Trägerrahmen 136 befestigt. Der Trägerrahmen 136 haltert einen Schwenkrahmen 138, an dem sich ein Bodenbearbeitungswerkzeug 140 in Form einer Scheibenegge abstützt. Anstelle der Scheibenegge kann auch ein beliebiges anderes Bodenbearbeitungswerkzeug 140 verwendet werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Landwirtschaftliche Maschine (100) mit einer Achsaufhängung (10) einer Zweiradanordnung, wobei die Achsaufhängung (10) ein Gehäuse (12) umfasst, welches wenigstens zwei mit jeweils einer Radachse (30, 32) verbundene Achsträger (15, 16) aufnimmt, wobei die Achsträger (15, 16) als Schwenkkörper ausgebildet sind, welche einen mit der jeweiligen Radachse (30, 32) verbundenen ersten Schenkel (18, 20) und einen zweiten Schenkel (22, 24) aufweisen, wobei die ersten Schenkel (18, 20) der jeweiligen Schwenkkörper sich auf entgegen gesetzten Seiten des Gehäuses erstrecken, wobei der erste und zweite Schenkel (18, 20, 22, 24) des jeweiligen Schwenkkörpers starr zueinander angeordnet sind und wobei die Schwenkkörper um wenigstens eine im Gehäuse (12) ortsfest gelagerte Schwenkachse aufgehängt sind, und dass Verbindungsmittel vorgesehen sind, welche die Schwenkkörper derart gelenkig miteinander verbinden, dass eine Schwenkbewegung des einen Schwenkkörpers um seine Schwenkachse eine gleichgerichtete Schwenkbewegung des anderen Schwenkkörpers um seine Schwenkachse auslöst, **dadurch gekennzeichnet, dass** die Verbindungsmittel eine Verbindungsstrebe (46) und Verbindungsbolzen (42, 44) umfassen, wobei die Verbindungsstrebe (46) über die Verbindungsbolzen (42, 44) schwenkbar mit den Schwenkkörpern verbunden ist.

2. Landwirtschaftliche Maschine (100) nach Anspruch 1, **dadurch gekennzeichnet, dass** zwei ortsfest gelagerte Schwenkachsen vorgesehen sind, an die jeweils ein Schwenkkörper aufgehängt ist.

3. Landwirtschaftliche Maschine (100) nach Anspruch 1 oder 2, **dadurch gekennzeichnet, dass** die Verbindungsmittel in einem Abstand zu der Schwenkachse eines jeden Schwenkkörpers angeordnet sind, so dass mit dem zweiten Schenkel (22, 24) eine Hebelwirkung um die Schwenkachse auf den ersten Schenkel (18, 20) ausübbar ist.

4. Landwirtschaftliche Maschine (100) nach einem der vorhergehenden Ansprüche, **dadurch gekennzeichnet, dass** die Verbindungs-mittel am zweiten Schenkel (22, 24) angeordnet sind.

5. Landwirtschaftliche Maschine (100) nach einem der vorhergehenden Ansprüche, **dadurch gekennzeichnet, dass** die Schwenkachse eines jeden Schwenkkörpers zwischen dem ersten und dem zweiten Schenkel (18, 20, 22, 24) angeordnet ist.

6. Landwirtschaftliche Maschine (100) nach einem der vorhergehenden Ansprüche, **dadurch gekennzeichnet, dass** der erste und zweite Schenkel (18, 20, 22, 24) eines jeden Schwenk-körpers starr in einem Winkel, vorzugsweise von 90°, zueinander angeordnet sind.

7. Landwirtschaftliche Maschine (100) nach einem der vorhergehenden Ansprüche, **dadurch gekennzeichnet, dass** die wenigstens eine Schwenkachse als Lagerbolzen (56, 58) ausgebildet ist und der Lagerbolzen (56, 58) an seinen Enden in Lageröffnungen (60, 62) gelagert ist, die an einer Gehäusewand (64) des Gehäuses (12) ausgebildet sind.

8. Landwirtschaftliche Maschine (100) nach Anspruch 7, **dadurch gekennzeichnet, dass** am Schwenkkörper zwischen dem ersten und dem zweiten Schenkel (18, 20, 22, 24) eine Führungsöffnung (52, 54) ausgebildet ist, welche zwischen den Lageröffnungen (60, 62) auf dem Lagerbolzen (56, 58) geführt ist.

9. Landwirtschaftliche Maschine (100) nach einem der Ansprüche vorhergehenden, **dadurch gekennzeichnet, dass** die zweiten Schenkel (22,24) schäkelförmig ausgebildete Endbereiche aufweisen in denen Lageröffnungen (38, 40) ausgebildet sind, in denen die Verbindungsbolzen (42, 44) gelagert sind.

10. Landwirtschaftliche Maschine (100) nach einem der Ansprüche vorhergehenden, **dadurch gekennzeichnet, dass** die Verbindungsstrebe (46) zwei Enden aufweist, an denen eine Führungsöffnung (48, 50) ausgebildet ist, welche auf dem jeweiligen Verbindungsbolzen (42, 44) geführt ist und die zweiten Schenkel (22, 24) der Schwenkkörper schwenkbar verbindet.

11. Landwirtschaftliche Maschine (100) nach Anspruch 7 oder 8, **dadurch gekennzeichnet, dass** die Lagerbolzen (56, 58) und Verbindungsbolzen (42, 44) horizontal zum Boden und quer zur Erstreckungsrichtung der ersten Schenkel (18, 20) ausgerichtet sind.

12. Landwirtschaftliche Maschine (100) nach einem der vorhergehenden Ansprüche, **dadurch gekennzeichnet, dass** der erste Schenkel (18, 20) einen als Rohr ausgebildeten Aufnahmebereich (26, 28) aufweist, in dem eine Radachse (30, 32) aufnehmbar ist.

13. Landwirtschaftliche Maschine (100) nach einem der vorhergehenden Ansprüche, ausgebildet als Bodenbearbeitungsgerät oder Bestellkombination (100).

## Claims

1. Agricultural machine (100) having an axle suspension (10) of a two-wheel arrangement, the axle suspension (10) comprising a housing (12) which accommodates at least two axle carriers (15, 16), each connected to a wheel axle (30, 32), the axle carriers (15, 16) taking the form of pivoting bodies, which comprise a first member (18, 20) connected to the respective wheel axle (30, 32) and a second member (22, 24), the first members (18, 20) of the respective pivoting bodies extending on opposite sides of the housing, the first and second members (18, 20, 22, 24) of the respective pivoting body being arranged rigidly in relation to one another and the pivoting bodies being suspended about at least one pivot axis fixedly supported in the housing (12), and that connecting means are provided, which articulate the pivoting bodies together in such a way that a pivoting movement of one pivoting body about its pivot axis produces a pivoting movement of the other pivoting body in the same direction about its pivot axis, **characterized in that** the connecting means comprise a connecting strut (46) and connecting pins (42, 44), the connecting strut (46) being pivotally connected to the pivoting bodies by the connecting pins (42, 44).

2. Agricultural machine (100) according to Claim 1, **characterized in that** two fixedly supported pivot axes are provided, on each of which a pivoting body is suspended.

3. Agricultural machine (100) according to Claim 1 or 2, **characterized in that** the connecting means are arranged at a distance from the pivot axis of each pivoting body, so that the second member (22, 24) can exert a lever action on the first member (18, 20) about the pivot axis.

4. Agricultural machine (100) according to any one of the preceding claims, **characterized in that** connecting means are arranged on the second member (22, 24).

5. Agricultural machine (100) according to any one of the preceding claims, **characterized in that** the pivot axis of each pivoting body is arranged between the first and the second member (18, 20, 22, 24).

6. Agricultural machine (100) according to any one of the preceding claims, **characterized in that** the first and second members (18, 20, 22, 24) of each pivoting body are rigidly arranged at an angle of preferably 90° to one another.

7. Agricultural machine (100) according to any one of the preceding claims, **characterized in that** one or more pivot axes take the form of pivot pins (56, 58) and the pivot pin (56, 58) is supported at its ends in bearing apertures (60, 62), which are formed on a housing wall (64) of the housing (12).

8. Agricultural machine (100) according to Claim 7, **characterized in that** a guide aperture (52, 54), running between the bearing apertures (60, 62) on the pivot pin (56, 58), is formed on the pivoting body between the first and the second members (18, 20, 22, 24).

9. Agricultural machine (100) according to any one of the preceding claims, **characterized in that** the second members (22, 24) have shackle-shaped end areas, in which bearing apertures (38, 40) are formed, in which the connecting pins (42, 44) are supported.

10. Agricultural machine (100) according to any one of the preceding claims, **characterized in that** the connecting strut (46) has two ends at which a guide aperture (48, 50) is formed, which runs on the respective connecting pin (42, 44) and pivotally connects the second members (22, 24) of the pivoting bodies.

11. Agricultural machine (100) according to Claim 7 or 8, **characterized in that** the pivot pins (56, 58) and the connecting pins (42, 44) are aligned horizontally to the ground and transversely to the direction in which the first members (18, 20) extend.

12. Agricultural machine (100) according to any one of the preceding claims, **characterized in that** the first member (18, 20) has a mounting area (26, 28) in the form of a tube, in which a wheel axle (30, 32) can be mounted.

13. Agricultural machine (100) according to any one of the preceding claims, formed as a soil tilling implement or a combined cultivating and sowing machine (100).

## Revendications

1. Machine agricole (100) comprenant une suspension d'essieu (10) d'un agencement à deux roues, la suspension d'essieu (10) comprenant un boîtier (12), qui reçoit au moins deux supports d'essieu (15, 16) connectés à chaque fois à un essieu de roue (30, 32), les supports d'essieu (15, 16) étant réalisés sous forme de corps pivotant, qui présentent une première branche (18, 20) connectée à l'essieu de roue respectif (30, 32) et une deuxième branche (22, 24), les premières branches (18, 20) du corps pivotant respectif s'étendant sur des côtés opposés du boîtier, les premières et deuxièmes branches (18, 20, 22, 24) du corps pivotant respectif étant disposées rigidement l'une par rapport à l'autre et les corps pivotants étant accrochés autour d'au moins un axe de pivotement monté fixement dans le boîtier (12), et des moyens de connexion étant prévus, lesquels relient les corps pivotants de manière articulée les uns aux autres de telle sorte qu'un mouvement de pivotement d'un corps pivotant autour de son axe de pivotement déclenche un mouvement de pivotement orienté dans le même sens de l'autre corps pivotant autour de son axe de pivotement, **caractérisée en ce que** les moyens de connexion comprennent un bras de connexion (46) et des boulons de connexion (42, 44), le bras de connexion (46) étant connecté de manière pivotante par le biais des boulons de connexion (42, 44) aux corps pivotants.

2. Machine agricole (100) selon la revendication 1, **caractérisée en ce que** deux axes de pivotement montés fixement sont prévus, sur lesquels est à chaque fois accroché un corps pivotant.

3. Machine agricole (100) selon la revendication 1 ou 2, **caractérisée en ce que** les moyens de connexion sont disposés à une certaine distance de l'axe de pivotement de chacun des corps pivotants de telle sorte qu'avec la deuxième branche (22, 24) un effet de levier puisse être exercé autour de l'axe de pivotement sur la première branche (18, 20).

4. Machine agricole (100) selon l'une quelconque des revendications précédentes, **caractérisée en ce que** les moyens de connexion sont disposés sur la deuxième branche (22, 24).

5. Machine agricole (100) selon l'une quelconque des revendications précédentes, **caractérisée en ce que** l'axe de pivotement de chacun des corps pivotants est disposé entre la première et la deuxième branche (18, 20, 22, 24).

6. Machine agricole (100) selon l'une quelconque des revendications précédentes, **caractérisée en ce que** la première et la deuxième branche (18, 20, 22, 24) de chacun des corps pivotants sont disposées rigidement suivant un certain angle, de préférence de 90°, l'une par rapport à l'autre.

7. Machine agricole (100) selon l'une quelconque des revendications précédentes, **caractérisée en ce que** l'au moins un axe de pivotement est réalisé sous forme de boulon de palier (56, 58) et le boulon de palier (56, 58) est monté à ses extrémités dans des ouvertures de palier (60, 62) qui sont réalisées sur une paroi de boîtier (64) du boîtier (12).

8. Machine agricole (100) selon la revendication 7, **caractérisée en ce qu'**une ouverture de guidage (52, 54) est réalisée sur le corps pivotant entre la première et la deuxième branche (18, 20, 22, 24), laquelle est guidée entre les ouvertures de palier (60, 62) sur le boulon de palier (56, 58).

9. Machine agricole (100) selon l'une quelconque des revendications précédentes, **caractérisée en ce que** les deuxièmes branches (22, 24) présentent des régions d'extrémité réalisées en forme de tourillons, dans lesquelles sont réalisées des ouvertures de palier (38, 40) dans lesquelles sont montés les boulons de connexion (42, 44).

10. Machine agricole (100) selon l'une quelconque des revendications précédentes, **caractérisée en ce que** le bras de connexion (46) présente deux extrémités sur lesquelles est réalisée une ouverture de guidage (48, 50), qui est guidée sur le boulon de connexion respectif (42, 44) et qui relie de manière pivotante les deuxièmes branches (22, 24) des corps pivotants.

11. Machine agricole (100) selon la revendication 7 ou 8, **caractérisée en ce que** les boulons de palier (56, 58) et les boulons de connexion (42, 44) sont orientés horizontalement par rapport au sol et transversalement à la direction d'étendue des premières branches (18, 20).

12. Machine agricole (100) selon l'une quelconque des revendications précédentes, **caractérisée en ce que** la première branche (18, 20) présente une région de réception (26, 28) réalisée sous forme tubulaire dans laquelle un essieu de roue (30, 32) peut être reçu.

13. Machine agricole (100) selon l'une quelconque des revendications précédentes, réalisée sous forme d'appareil de travail du sol ou sous forme de combiné de semis (100).
